# EUROPEAN PATENT SPECIFICATION

(11) **EP 4 075 008 B1**
(45) Date of publication and mention of the grant of the patent: **10.07.2024**
(21) Application number: 21382318.0
(22) Date of filing: 14.04.2021
(51) Int. Cl.: F16D 65/12

(54) **BRAKE DISC FOR MOTORCYCLES**
BREMSSCHEIBE FÜR MOTORRÄDER
DISQUE DE FREIN POUR MOTOCYCLETTES

(43) Date of publication of application: 19.10.2022
(73) Proprietor: Industrias Galfer, S.A., Ctra. Montmeló, 50 08403 Granollers (Barcelona) (ES)
(72) Inventor: ESTEVE LÓPEZ, Marc, 08403 GRANOLLERS (Barcelona) (ES)
(74) Representative: Carbonell Callicó, Josep

(56) References cited:
- TW-U- M 462 809
- US-A1- 2006 080 821
- US-A1- 2017 198 774
- US-B2- 7 810 615

## Description

### Technical field.

The present invention is applicable in the sector dedicated to manufacturing brake discs for motorcycles and in particular those brake discs which comprise a brake track fixed by means of anchoring means to a core which rotates integral with a wheel of the motorcycle.

### Prior state of the art.

Currently, two types of anchors are used in the market for securing the brake track to the core of the disc, known as: anchor bushings and anchor pins.

The anchor bushing is the most used in street motorcycles due to the robustness and durability thereof, and it consists of a bushing riveted on washers and provides a mounting of the assembly; in this manner, the brake track is always maintained in a certain position with respect to the core of the disc.

The anchor pin is used mainly in the field of competitions. In this case, in order to reduce the weight, the brake track has T-shaped support legs which are generally anchored to the core by means of screws.

The main advantage of the anchor pin is that it enables a certain expansion of the material, preventing the brake track from becoming jammed when reaching high temperatures.

In some cases, the brake track is anchored by means of a screwed plate, which prevents the self-centring of said brake track with respect to the core, since there is no spring which forces the position of said track in a lateral direction.

US 2017/0198774 A1 discloses a brake disc comprising: a brake track which has radial legs on the inner contour thereof; a core which has radial recesses on the outer contour thereof wherein respective end portions of the legs of the brake track are housed and; means for anchoring the brake track to the core of the disc. The legs of the track and the peripheral portion of the core disclosed in US 2017/0198774 A1 are arranged in a coplanar manner. Moreover, the legs comprise a circular hole that forms mounting points of the anchoring means, said anchoring means comprising pins provided with a head which acts against a first face of the corresponding leg of the brake track and of the core, an da through rod mounted through the hole in the corresponding leg and the end of which protrudes through a second face opposite from said leg; and a retaining element of the pin.

US 2006/0080821 A1 discloses a brake disc comprising a brake track and a core in a concentric relationship with each other with a clearance therebetween, each of said brake track and core having plural sets of semicircular connecting dents opening toward said clearance to thereby form inserting holes, wherein a hollow pin is inserted in each inserting holes to connect the brake track with the core. The hollow pins are disclosed to be made of a metal having a surface-treated layer and are formed into a convex shape in at least part of an end portion thereof.

US 2006/0080281 A1 also discloses a hollow pin with a stepped portion. Said hollow pin is made up of a small-diameter portion and a large-diameter portion which lies on the side of a flange. The stepped portion is formed in a portion where the small-diameter portion changes to the large-diameter portion. The large diameter portion of the hollow pin is inserted into the inserting hole. On top of the stepped portion, a coned spring washer is inserted into the small-diameter portion so as to be seated on the stepped portion. A fixing washer is placed on top of the coned spring washer, and the end of the hollow pin is then caulked onto the fixing washer, so that the fixing washer is fixed in position without damaging a surface-treated layer of the pin.

EP 3106702 A1 discloses a brake disc including a disc portion, having a first side face and a second side face facing opposite to the first side face, the first side face being for being assembled with a wheel and facing the wheel, the disc portion including an inner annular member and an outer annular member, the inner annular member being circumferentially formed with a first assembling mechanism, the outer annular member having a second assembling mechanism, the first assembling mechanism and the second assembling mechanism being correspondingly connected with each other; at least two connecting assemblies, being connected with the first assembling mechanism and the second assembling mechanism respectively, each connecting assembly including a helical spring, the helical spring being on the first side face and abutting against, between the connecting assembly and the first side face.

The main problem to be solved focusses on the floating of the track-core assembly and on the self-centring of the track with the core, since with the existing anchors the brake track is never completely centred on the calliper. This generates a series of problems, among which it is worth mentioning:
- Increase in temperature in the brake track: the off-centring enables the brake track to be supported on the brake pads when it is not braking; this causes, with simple friction, the temperature of the system to increase in an undesired manner.
- Tapping of the track against the brake pads, even separating them from the working position thereof (moving the pistons of the brake calliper back, which will make them have to travel farther in order to reach the braking position).
- Problems with vibration in the rim when the motorcycle passes through a disturbance on the road.

### Description of the invention.

The brake disc object of the present invention has technical features aimed at satisfactorily solving the problems set forth above.

In particular, the present invention discloses a brake disc for motorcycles according to claim 1. Preferred embodiments are object of the dependent claims.

This brake disc is of the type described in the preamble of the first claim and comprises: a brake track which has radial legs on the inner contour thereof, a core which has radial recesses on the outer contour thereof wherein respective end portions of the legs of the brake track are housed and means for anchoring the brake track to the core of the disc.

According to the invention, the legs of the track and the peripheral portion of the core, which carries the recesses, have the same thickness and are arranged in a coplanar manner; said legs comprising a circular hole that forms mounting points of anchoring means comprising: pins provided with a head which acts against a first face of the legs and of the core and of a through rod mounted through the hole in the corresponding leg and the end of which protrudes through a second face opposite from the corresponding leg; a spring mounted on the protruding end of the pin and which exerts a pressure against the second face of the legs of the track and of the core maintaining them aligned, and a retaining element of the spring in the mounting position on the rod of the pin.

The legs of the brake track have a uniform width, slightly less than that of the recesses in the core and are partially housed in said recesses, the end of said legs being spaced from the bottom of the corresponding recesses.

In this manner, the geometry of the support of the track favours the controlled expansion in one direction, specifically towards the centre of the disc, preventing problems of jamming with the core when the brake track heats up.

When the brake track reaches high temperatures due to the braking action, the mounting hole defined in the legs dilates expanding outward, increasing the diameter thereof. This phenomenon causes the operation of the system to not be compromised in these situations, with which the floating of the system is maintained the same throughout the working range of the disc.

With this system of a pin and a spring which are concentric with respect to a direction perpendicular to the plane of the disc, correct self-centring of the brake track with the core of the brake disc is always maintained.

Advantageously, the retention element of the spring in the mounting position on the rod of the pin is constituted by a circlip or elastic ring mounted in a perimeter slot close to the free end of the rod, having foreseen the possibility of incorporating a first washer between the spring and the brake track and/or a second washer between the spring and the circlip.

This mounting of the locking means is quick, since by not using screws, production time is saved, it being enough to compress the spring and mount the circlip or elastic ring, eventually with the mentioned washers, in order to restrict the axial movement of the brake track with respect to the core.

### Brief description of the contents of the drawings.

As a complement to the description provided herein, and for the purpose of helping to make the features of the invention more readily understandable, the present specification is accompanied by a set of drawings which, by way of illustration and not limitation, represent the following:
- Figure 1 shows an elevation view of an exemplary embodiment of the brake disc for motorcycles according to the invention.
- Figure 2 corresponds to an enlarged view of detail A of Figure 1, wherein the anchoring means have been represented with dotted lines in order to enable the observation of the position of one of the legs of the brake track in one of the recesses of the core.
- Figure 3 shows a profile view of the brake disc of Figure 1 cross-sectioned along a diametrical plane.
- Figure 4 corresponds to an enlarged view of detail B of Figure 2.

### Detailed description of embodiments of the invention.

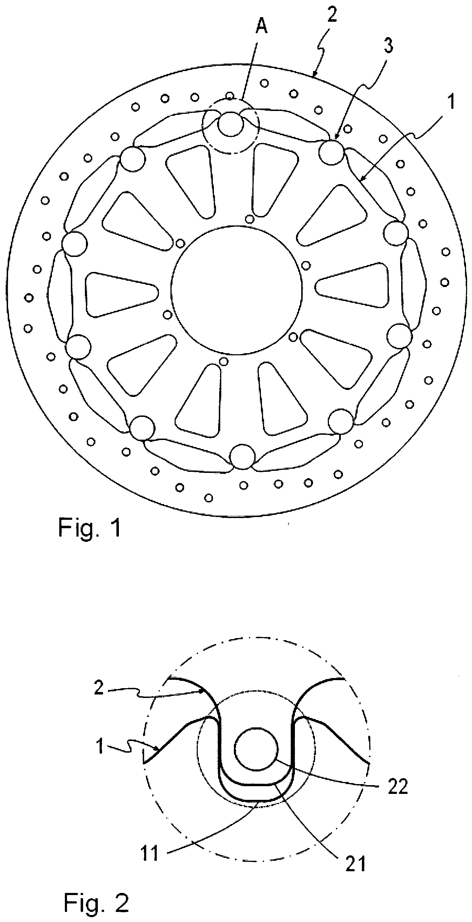

The brake disc shown in Figure 1 comprises a brake track (2) arranged externally with respect to the core (1) of the disc and fixed around said core (1) by anchoring means.

As shown in the enlarged view of detail A, shown in Figure 2, the track (2) has radial legs (21), with a uniform width, on the inner contour thereof, provided with a circular hole (22) for mounting the anchoring means; and the core (1) has on the outer contour thereof radial recesses (11) wherein the respective end portions of the legs (21) of the brake track (2) are housed, the ends of said legs (21) being maintained spaced from the bottom of the recesses (11) to an extent suitable for enabling the expansion of said legs towards the centre of the disc, if the brake track heats up during the actuation of the brake.

The legs (21) of the track (2) and the peripheral portion of the core (1) wherein the recesses (11) are defined have the same thickness, the anchoring means being responsible for ensuring that they are maintained coplanar in the mounting position.

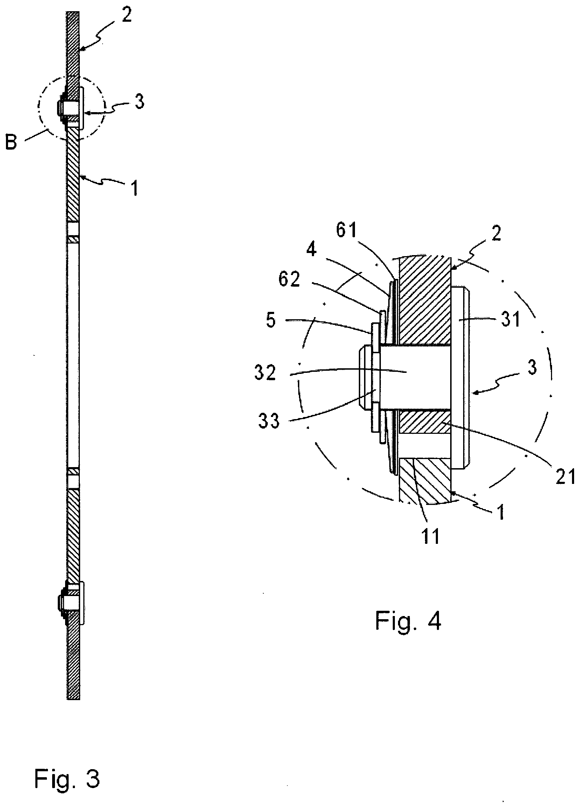

The anchoring means, shown in the cross section of Figure 3 and in the enlarged view of the detail (B) shown in Figure 4, comprise pins (3) provided with a head (31) which acts against a first face of the legs (21) of the track (2) and of the core (1) and of a through rod (32) which is mounted through the hole (22) in the leg (21).

In the mounting position, the end of the rod (32) protrudes through a second face of the corresponding leg (21), to an extent sufficient for enabling the mounting of a plate spring (4) which exerts a pressure against the second face of the legs (21) of the track (2) and of the core (1), maintaining the track (2) coplanar with the core (1).

The retention of the spring (4) in the mounting position is performed by means of a retention element constituted by a circlip or elastic ring (5) mounted in a perimeter slot (33) defined in the rod (32) of the pin (3) and close to the free end thereof.

In the example shown in Figure 4, the retention means of the spring (4) also comprise: a first washer (61) arranged between the circlip or elastic ring (5) and the brake track (2) and the function of which is to improve the wear area of the core (1), and a second washer (62) arranged between the circlip or elastic ring (5) and the spring (4).

Having sufficiently described the nature of the invention, in addition to a preferred exemplary embodiment, it is hereby stated for the relevant purposes that the materials, shape, size and layout of the described elements may be modified, provided that it does not imply altering the essential features of the invention claimed below.

## Claims

1. A brake disc for motorcycles; comprising: a brake track (2) which has radial legs (21) on the inner contour thereof; a core (1) which has radial recesses (11) on the outer contour thereof wherein respective end portions of the legs (21) of the brake track (2) are housed and; means for anchoring the brake track (2) to the core (1) of the disc; wherein:
- the legs (21) of the track (2) and the peripheral portion of the core (1), which carries the recesses (11) are arranged in a coplanar manner;
- said legs (21) comprise a circular hole (22) that forms mounting points of the anchoring means;
- said anchoring means comprise:
- pins (3) provided with: a head (31) which acts against a first face of the corresponding leg (21) of the brake track (2) and of the core (1), and a through rod (32) mounted through the hole (22) in the corresponding leg (21) and the end of which protrudes through a second face opposite from said leg (21);
and wherein the legs (21) of the track (2) and the peripheral portion of the core (1) have the same thickness;
and in that said anchoring means further comprise:
- a spring (4) mounted on the protruding end of the pin (3) and which exerts a pressure against the second face of the corresponding leg (21) and of the core (1), and maintains them in a coplanar manner, and
- a retaining element of the spring in the mounting position on the rod (32) of the pin (3);
**characterised in that** the legs (21) of the brake track (2) have a uniform width, slightly less than that of the recesses (11) in the core (1) and are partially housed in said recesses (11), the end of said legs (21) being spaced from the bottom of the corresponding recesses (11) to an extent suitable for enabling the expansion of said legs (21) towards the centre of the disc, if the brake track (2) heats up.

2. The brake disc according to claim 1, **characterised in that** the retaining element of the spring (4) in the mounting position on the rod (32) of the pin (3) is constituted by a circlip or elastic ring (5) mounted in a perimeter slot (33) defined in an area of the rod (32) close to the end thereof.

3. The brake disc according to claim 2, **characterised in that** it comprises a first washer (61) mounted on the rod (32) of the pin (3) and arranged between the circlip or elastic ring (5) and the brake track (2).

4. The brake disc, according to any of claims 2 and 3, **characterised in that** it comprises a second washer (62) mounted on the rod (32) of the pin (3) and arranged between the circlip or elastic ring (5) and the spring (4).

## Patentansprüche

1. Bremsscheibe für Motorräder; umfassend: eine Bremsbahn (2), die an ihrer Innenkontur radiale Schenkel (21) aufweist; einen Kern (1), der an seiner Außenkontur radiale Aussparungen (11) aufweist, in denen jeweilige Endabschnitte der Schenkel (21) der Bremsbahn (2) untergebracht sind, und; Mittel zum Verankern der Bremsbahn (2) am Kern (1) der Scheibe; wobei:
- die Schenkel (21) der Bahn (2) und der die Aussparungen (11) tragende Randabschnitt des Kerns (1) koplanar angeordnet sind;
- die Schenkel (21) ein kreisförmiges Loch (22) umfassen, das Befestigungspunkte für die Verankerungsmittel bildet;
- wobei die Verankerungsmittel Folgendes umfassen:
- Stifte (3), die versehen sind mit: einem Kopf (31), der gegen eine erste Fläche des entsprechenden Schenkels (21) der Bremsbahn (2) und des Kerns (1) wirkt, und einer Durchgangsstange (32), die durch das Loch (22) im entsprechenden Schenkel (21) montiert ist und deren Ende durch eine zweite Fläche gegenüber dem Schenkel (21) ragt;
und wobei die Schenkel (21) der Bahn (2) und der Randabschnitt des Kerns (1) die gleiche Dicke aufweisen;
und wobei die Verankerungsmittel ferner Folgendes umfassen:
- eine Feder (4), die am hervorstehenden Ende des Stifts (3) montiert ist und einen Druck auf die zweite Fläche des entsprechenden Schenkels (21) und des Kerns (1) ausübt und diese in einer koplanaren Stellung hält, und
- ein Halteelement der Feder in der Montageposition auf der Stange (32) des Stifts (3);
**dadurch gekennzeichnet, dass** die Schenkel (21) der Bremsbahn (2) eine gleichmäßige Breite aufweisen, die etwas geringer ist als die der Aussparungen (11) im Kern (1), und teilweise in den Aussparungen (11) untergebracht sind, wobei das Ende der Schenkel (21) vom Boden der entsprechenden Aussparungen (11) in einem Ausmaß beabstandet ist, das die Ausdehnung der Schenkel (21) in Richtung der Scheibenmitte ermöglicht, wenn sich die Bremsbahn (2) erwärmt.

2. Bremsscheibe nach Anspruch 1, **dadurch gekennzeichnet, dass** das Halteelement der Feder (4) in der Montageposition auf der Stange (32) des Stifts (3) durch einen Sicherungsring oder elastischen Ring (5) gebildet ist, der in einem Umfangsschlitz (33) montiert ist, der in einem Bereich der Stange (32) nahe dem Ende derselben definiert ist.

3. Bremsscheibe nach Anspruch 2, **dadurch gekennzeichnet, dass** sie eine erste Unterlegscheibe (61) umfasst, die auf der Stange (32) des Stifts (3) montiert und zwischen dem Sicherungsring oder elastischen Ring (5) und der Bremsbahn (2) angeordnet ist.

4. Bremsscheibe nach einem der Ansprüche 2 und 3, **dadurch gekennzeichnet, dass** sie eine zweite Unterlegscheibe (62) umfasst, die auf der Stange (32) des Stifts (3) montiert und zwischen dem Sicherungsring oder elastischen Ring (5) und der Feder (4) angeordnet ist.

## Revendications

1. Disque de frein pour motocyclettes ; comprenant : une piste (2) de frein qui possède des pattes (21) radiales sur son contour intérieur ; un noyau (1) qui possède des évidements (11) radiaux sur son contour extérieur dans lesquels sont logées des parties d'extrémité respectives des pattes (21) de la piste (2) de frein et ; un moyen d'ancrage de la piste (2) de frein au noyau (1) du disque ; dans lequel :
- les pattes (21) de la piste (2) et la partie périphérique du noyau (1), qui porte les évidements (11), sont disposées de manière coplanaire ;
- lesdites pattes (21) comprennent un trou circulaire (22) qui forme des points de montage du moyen d'ancrage ;
- ledit moyen d'ancrage comprend :
- des goupilles (3) munies : d'une tête (31) qui agit contre une première face de la patte (21) correspondante de la piste (2) de frein et du noyau (1), et d'une tige (32) traversante montée à travers le trou (22) dans la patte (21) correspondante et dont l'extrémité dépasse à travers une seconde face opposée à ladite patte (21) ;
et dans lequel les pattes (21) de la piste (2) et la partie périphérique du noyau (1) ont la même épaisseur ;
et en ce que ledit moyen d'ancrage comprend en outre :
- un ressort (4) monté sur l'extrémité saillante de la goupille (3) et qui exerce une pression contre la seconde face de la patte (21) correspondante et du noyau (1), et qui les maintient de manière coplanaire, et
- un élément de retenue du ressort dans la position de montage sur la tige (32) de la goupille (3) ;
**caractérisé en ce que** les pattes (21) de la piste (2) de frein ont une largeur uniforme, légèrement inférieure à celle des évidements (11) dans le noyau (1) et sont partiellement logées dans lesdits évidements (11), l'extrémité desdites pattes (21) étant espacée du fond des évidements (11) correspondants dans une mesure appropriée pour permettre l'expansion desdites pattes (21) vers le centre du disque, si la piste (2) de frein chauffe.

2. Disque de frein selon la revendication 1, **caractérisé en ce que** l'élément de retenue du ressort (4) dans la position de montage sur la tige (32) de la goupille (3) est constitué par un circlip ou un anneau élastique (5) monté dans une fente périmétrique (33) définie dans une zone de la tige (32) à proximité de l'extrémité de celle-ci.

3. Disque de frein selon la revendication 2, **caractérisé en ce qu'**il comprend une première rondelle (61) montée sur la tige (32) de la goupille (3) et disposée entre le circlip ou l'anneau élastique (5) et la piste (2) de frein.

4. Disque de frein, selon l'une quelconque des revendications 2 et 3, **caractérisé en ce qu'**il comprend une seconde rondelle (62) montée sur la tige (32) de la goupille (3) et disposée entre le circlip ou l'anneau élastique (5) et le ressort (4).
